# DEMANDE DE BREVET EUROPEEN

(11) **EP 0 982 897 A1**
(43) Date de publication de la demande: **01.03.2000**
(21) Numéro de dépôt: 99401986.7
(22) Date de dépôt: 05.08.1999
(51) Int. Cl.: H04L 12/24

(54) **Système de gestion de réseaux de télécommunication**

(30) Priorité: 27.08.1998 FR 9810759
(71) Demandeur: ALCATEL, 75008 Paris (FR)
(72) Inventeur: Carre, Laurent, 78960 Voisins le Bretonneux (FR)
(74) Mandataire: Lamoureux, Bernard

(57) **Abrégé**

L'invention concerne un système de gestion de réseaux de télécommunication comprenant un ou plusieurs modules de gestion des informations du réseau (IM1, IM2), et un ou plusieurs modules de service utilisateur (USM). Selon l'invention il est prévu d'équiper le système de gestion d'une architecture logicielle comportant une interface (f) apte à supporter une ou plusieurs couches (CP) de présentation utilisateur pour un module de gestion des services utilisateur (USM).

## Description

L'invention concerne un système de gestion de réseaux de télécommunication.

On rappelle qu'un réseau de télécommunication est constitué par l'ensemble des équipements matériel et logiciel qui permettent à des utilisateurs payant de communiquer. Parmi ces équipements il y a notamment les terminaux de télécommunications des utilisateurs qui peuvent tout aussi bien être des terminaux fixes ou mobile. Il y a aussi les systèmes d'accès au réseau, les centres de commutation et les centres de gestion du réseau.

L'invention s'applique à tout type de réseau de télécommunication, fixe ou mobile.

On s'intéresse dans ce qui va suivre, plus particulièrement aux centres de gestion d'un réseau de télécommunication également connus par la terminologie anglaise en tant que "*Operation System*" (OS). Ces centres permettent à l'exploitant d'un réseau de télécommunication de gérer le réseau et de le configurer.

On rappelle qu'un centre de gestion d'un réseau de télécommunication est structuré en cinq blocs fonctionnels F, A, C, P, S, à savoir la gestion des fautes F, la configuration C, l'information sur la charge payante A, la performance (qualité-débit) P et la sécurité S.

Un centre de gestion ne fonctionne pas en temps réel par rapport au réseau de communication lui même. Le centre de gestion n'a pas besoin de pénétrer dans le réseau à chaque besoin d'établissement d'un appel téléphonique. Par contre ces centres permettent de remonter des informations du réseau ou de rentrer dans le réseau chaque fois qu'il est nécessaire d'intervenir pour le surveiller et le reconfigurer selon le problème rencontré.

Les liaisons entre les centres de gestion OS et les différents éléments du réseau de télécommunication ont été normalisées par "ITU. L'ensemble des recommandations est défini par la série dénommé M et la série X, M concernant les aspects pratiques et la série X concerne les protocoles de communication et l'implémentation.

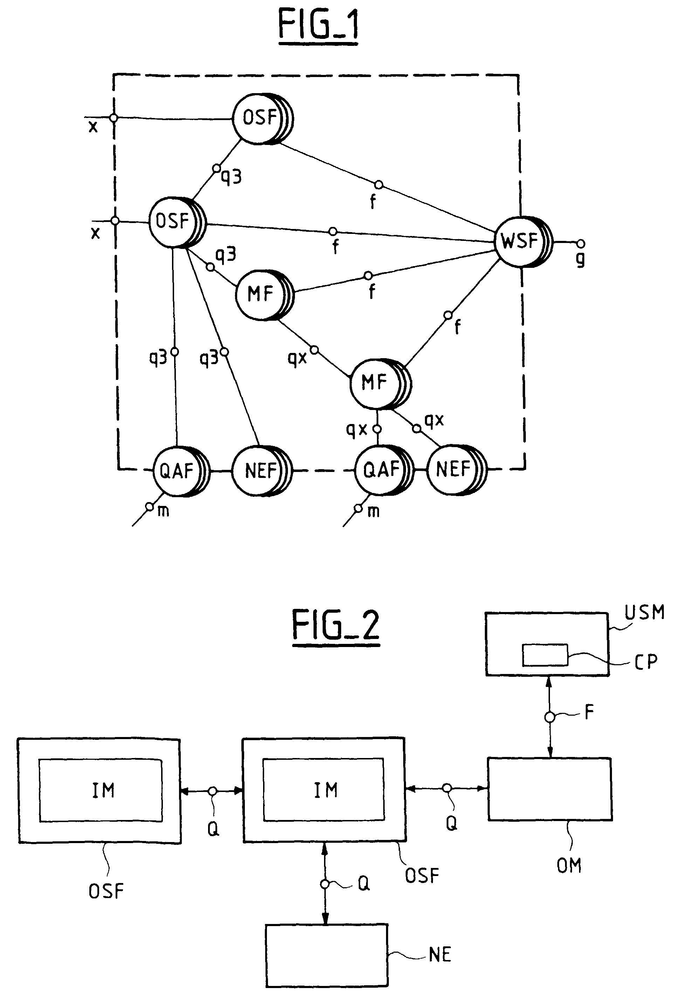

On peut citer principalement la norme ITU-T M3010 qui présente un concept dénommé TMN : Telecommunication Management Network ou Réseau de Gestion des Télécommunications. L'architecture fonctionnelle d'un tel TMN est présentée sur la figure 1. Selon la norme, un TMN peut comporter plusieurs types d'ensembles fonctionnels, certains étant optionnels :
- OSF ("*Operation System Function*"),
- WSF ("*Work Station Function*"),
- MF *("Mediation Function"),*
- QAF ("*Q Adaptor Functions*"),
- NEF ("*Network Element Function*").

Nous n'allons pas décrire en détails toutes ces fonctions, certaines étant en dehors du cadre de l'invention.

Le centre de gestion proprement dit est classiquement constitué des fonctions OSF et WSF. La fonction OSF représente les applications de gestion à proprement parler tandis que la fonction WSF contient les fonctions de présentation de l'information et d'interfaces avec les utilisateurs.

Tous ces ensembles fonctionnels peuvent échanger des informations entre eux au travers d'interfaces. Toujours selon la norme, des interfaces de type f relient les ensembles fonctionnels de type WSF aux ensembles fonctionnels de types MF et OSF. Des interfaces de type q3 permettent de relier les ensembles fonctionnels de type OSF avec des ensembles fonctionnels de types OSF, MF, QAF et NF. Des interfaces de type qx permettent les liaisons des ensembles fonctionnels MF avec des ensembles fonctionnels de type MF, QAF et NF.

Enfin, les interfaces x, q et m permettent les communications avec l'extérieur du TMN à partir des ensembles OSF, WSF et QAF respectivement.

L'interface q (encore appelée "point de référence q") est définie par un langage de modélisation de l'interface, car il est dépendant de chacun des éléments de réseau géré. Selon la norme ce langage de description est le langage GDMO ("*Guideline for the Definition of Managed Objects*). On utilise aussi, pour la définition des données, le langage ASN.1 *("Abstract Syntax Notation 1*").

Pour ce qui est de l'interface f, les recommandations sont d'ordre général. Il n'y a pas de réelle spécification pour savoir comment implémenter l'interface F.

Aussi, l'état de l'art consiste souvent à baser les fonctions d'interfaces utilisateurs (WSF) sur les interfaces q directement.

Or, les interfaces q ne sont pas prévues pour supporter les couches de présentation utilisateur (opérateurs) des ensembles fonctionnels WSF. L'interface q est conçue pour des dialogues entre des systèmes de gestion.

Baser les interfaces opérateurs directement sur l'interface q présente les inconvénients suivants :
- L'écart sémantique entre la définition des objets à l'interface q et leur représentation est très grand, donc le coût de développement d'une telle fonction est très élevé. De ce fait, changer de type de représentation est très coûteux.
- La fonction WSF devient totalement dépendante du système. Autrement dit, il n'est pas facilement possible d'avoir une même implémentation de la fonction WSF commune à plusieurs applications qui ne peuvent être relié par une interface q.

La norme de définition de l'architecture du TMN ("*Telecommunication Management Network")* ITU-T M3010 définit une interface de présentation pour les systèmes de gestion de réseaux qui est l'interface f. Toutefois, comme cela a été dit, la norme reste évasive quant à la définition formelle de cette interface.

Les systèmes de gestion basés sur l'architecture TMN n'implémentent pas d'interface f. Les interfaces utilisateur sont directement liées à l'interface q décrite, comme cela a été dit, en langage GDMO/ASN.1 et donc avec les inconvénients précités. En pratique, il est nécessaire de développer autant de modules interfaces utilisateurs USM (pour "*User Management System*"), mettant en oeuvre une fonction OSF, que de couches présentations désirées avec une interface q.

La présente invention permet de remédier à ces inconvénients.

À cette fin, la présente invention a plus particulièrement pour objet un système de gestion de réseaux de télécommunication comprenant un ou plusieurs modules de gestion des informations du réseau, et un ou plusieurs modules de service utilisateur. Ce système se caractérise en ce qu'il comporte une architecture logicielle comportant une interface apte à supporter une ou plusieurs couches de présentation utilisateur pour un module de gestion des services utilisateur, et en ce que l'architecture logicielle comporte une couche de médiation entre l'interface supportant les couches de présentation utilisateur et le module de gestion des informations.

De façon pratique, une interface supplémentaire correspondant à l'interface f du réseau de gestion de télécommunication TMN est introduite de préférence dans le module de gestion des services utilisateurs USM (User Service Manager).

Cette interface est construite à partir des besoins communs à tous les modes de présentation, son modèle est lié à la représentation externe des entités gérées par le système. Une couche logicielle unique de médiation entre cette interface f et l'interface q est prévue et partagée par tous les modules de présentation utilisateur.

D'autres particularités et avantages de l'invention apparaîtront à la lecture de la description qui va suivre et qui est donnée à titre d'exemple non limitatif et en regard des dessins sur lesquels :
- la figure 1, déjà décrite, représente un schéma général illustrant les ensembles fonctionnels d'un réseau de gestion de télécommunication (TMN) ;
- la figure 2, représente un schéma général d'un système de gestion selon l'invention ;
- la figure 3, représente un schéma détaillé de l'architecture logicielle selon l'invention.

Comme cela est illustré sur la figure 2, un module de gestion des informations du réseau IM1 peut être relié à un autre module de gestion des informations du réseau IM2 ou à un équipement de réseau NE, à travers un point de référence q (c'est à dire une interface q définie précédemment).

Ces deux modules de gestion IM1 et IM2 implémentent respectivement deux fonctions OSF1 et OSF2 (représentées arbitrairement comme deux boîtes englobantes).

On a également représenté un module d'interface utilisateur USM.

Conformément à l'invention et pour les raisons invoquées précédemment, il est proposé d'équiper le système de gestion d'une architecture logicielle comportant une interface f apte à supporter une ou plusieurs couches CP de présentation utilisateur pour un module de gestion de services utilisateur USM.

L'architecture logicielle comporte également une couche de médiation OM entre l'interface f supportant les couches de présentation utilisateur CP et le module de gestion des informations IM1 qui est en liaison avec le module de gestion des services utilisateur USM.

De façon pratique, l'interface f correspond à l'interface f normalisée d'un réseau TMN. Elle peut par exemple être introduite dans le module logiciel USM. L'interface est construite à partir des besoins communs à tous les modes de présentation et son modèle est lié à la présentation externe des entités gérées par le système.

La couche de médiation OM entre cette interface f et l'interface q est unique et partagée par tous les modules de présentation utilisateur ("Presentation *Handler"* en terminologie anglaise).

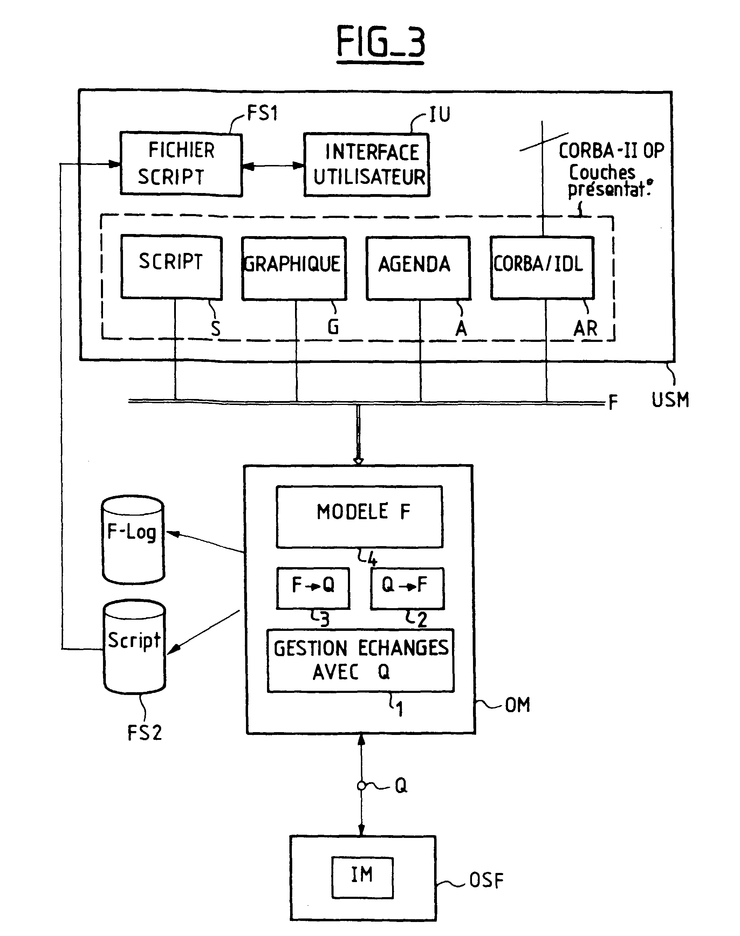

On a représenté sur la figure 3, un schéma illustrant de manière plus détaillée l'architecture logicielle selon l'invention. On retrouve sur cette figure 3 certains des éléments précédemment présentés pour la figure 2.

Les informations issues d'une interface q sont par exemple transportées par le protocole CMIP (Common Management Information Protocol) et modélisées suivant le langage dénommé GDMO/ASN.1 qui est un langage du domaine des télécommunications, et reçues par la couche de médiation OM .

Le niveau 1 de la couche de médiation assure la gestion des échanges des données avec cette interface q.

Puis les niveaux référencés 2, 3 permettent respectivement de passer du modèle QM de représentation des données au modèle FM, et du modèle FM de représentation des données au modèle QM. On appelle modèle FM le modèle de données utilisé pour effectuer des échanges de données par une interface f. De même le modèle QM est le modèle de données utilisé pour l'interface q.

Le niveau 4, quant-à-lui, définit ce modèle FM de représentation des données de l'interface f. Selon des mises en oeuvre de l'invention, il peut s'agir d'une représentation des informations basée sur les technologies CORBA ou CORBA-IDL (pour "*Interface Description Language")* ou des appels fonctionnels en langage C++.

Ainsi, la couche de médiation OM, en plus d'effectuer les transformations des modèles de représentation des données, peut avoir à effectuer des conversions de protocoles.

Par exemple, elle peut effectuer une translation entre le protocole CMIP et le protocole llOP ou tout autre protocole basé sur les technologies de type CORBA ainsi que définies par l'OMG ("*Open Management Group*").

A cette fin, la couche de médiation OM réalise une concaténation des niveaux d'héritage du langage GDMO et la transformation en type de base des types ASN.1 et inversement.

Préférentiellement, l'interface f supporte plusieurs types de couches de présentation utilisateur.

Selon un mode de réalisation, les couches de présentation utilisateurs peuvent être intégrées dans la couche de médiation OM.

Selon un autre mode de réalisation, les couches de présentation utilisateurs peuvent être intégrées dans le module de gestion de services utilisateurs USM tel que représenté sur la figure 3.

Selon le mode de réalisation représenté, l'interface f supporte les couches de présentation utilisateurs suivantes :
- une interface G graphique directe,
- un langage de script S permettant à l'utilisateur de décrire ses propres macro-instructions FS1 ou des macro-instructions stockées dans des fichiers FS2, par l'intermédiaire d'une interface utilisateur IU,
- un accès AR vers des réseaux informatiques Internet, Intranet ou toute application client à travers le protocole de communication llOP.

L'interface F supporte également une couche présentation telle qu'une fonction agenda A.

On peut aussi ajouter à la couche de médiation OM un lien vers un module de journalisation, F_Log, dont le but est de permettre le stockage des conversions effectuées par cette couche.

L'architecture logicielle qui vient d'être décrite permet d'offrir des modules ouverts de gestion des services utilisateurs USM.

## Revendications

1. Système de gestion de réseaux de télécommunication comprenant un ou plusieurs modules de gestion des informations du réseau (IM1, IM2), et un ou plusieurs modules de service utilisateur (USM), caractérisé en ce qu'il comporte une architecture logicielle comportant une interface (f) apte à supporter une ou plusieurs couches (CP) de présentation utilisateur pour un module de gestion des services utilisateur (USM), et en ce que l'architecture logicielle comporte une couche de médiation (OM) entre l'interface (f) supportant les couches de présentation utilisateur et le module de gestion des informations (OSF).

2. Système de gestion de réseaux selon la revendication 1, caractérisé en ce que la couche de médiation (OM) permet des échanges entre un protocole CMIP supportant une représentation des informations basée sur le langage GDMO/ASN.1 et un protocole basé sur la technologie CORBA supportant une représentation des informations basée sur le langage CORBA ou IDL.

3. Système de gestion de réseaux selon la revendication 2, caractérisé en ce que la couche de médiation (OM) réalise notamment une concaténation des niveaux d'héritage du langage GDMO et la transformation en type de base des types ASN.1 et inversement.

4. Système de gestion de réseaux selon la revendication 1 ou 2, caractérisé en ce que l'interface (f) supporte un ou plusieurs types de couches de présentation utilisateur.

5. Système de gestion de réseau selon la revendication 4, caractérisé en ce que les couches de présentation utilisateurs sont intégrées dans la couche de médiation (OM).

6. Système de gestion de réseau selon la revendication 5, caractérisé en ce que les couches de présentation utilisateurs sont intégrées dans le module de gestion de services utilisateurs (USM).

7. Système de gestion de réseau selon les revendications 5 à 6, caractérisé en ce que l'interface (f) supporte :
- une interface (G) graphique directe,
- un langage de script (S) permettant à l'utilisateur de décrire ses propres macro-instructions,
- un accès (AR) vers des réseaux informatiques à travers le protocole llOP.
